# EUROPEAN PATENT SPECIFICATION

(11) **EP 3 902 300 B1**
(45) Date of publication and mention of the grant of the patent: **30.08.2023**
(21) Application number: 20171424.3
(22) Date of filing: 24.04.2020
(51) Int. Cl.: H04W 12/04

(54) **PROHIBITING INEFFICIENT DISTRIBUTION OF PUBLIC KEYS FROM THE PUBLIC LAND MOBILE NETWORK**
VERMEIDEN DER INEFFIZIENTEN VERTEILUNG VON ÖFFENTLICHEN SCHLÜSSELN IM ÖFFENTLICHEN MOBILNETZWERK
ÉVITER LA DISTRIBUTION INEFFICIENTE DES CLÉFS PUBLIQUES DANS LE RÉSEAU MOBILE PUBLIQUE

(43) Date of publication of application: 27.10.2021
(73) Proprietor: Nokia Technologies Oy, 02610 Espoo (FI)
(72) Inventor: Casati, Alessio, West Molesey, Surrey KT8 1NT (GB)
(74) Representative: Page White Farrer

(56) References cited:
- EP-A1- 2 247 131
- US-A1- 2015 296 375
- US-A1- 2019 159 023
- ANONYMOUS: "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.3.0, 17 September 2018 (2018-09-17), pages 1-330, XP051487017,

## Description

### Field of the disclosure

The present disclosure relates to an apparatus, a method, and a computer program for providing a public key of a public land mobile network to a terminal.

### Background

A communication system can be seen as a facility that enables communication sessions between two or more entities such as user terminals, base stations/access points and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link.

A user can access the communication system by means of an appropriate communication device or terminal. A communication device of a user is often referred to as user equipment (UE) or user device. A communication device is provided with an appropriate signal receiving and transmitting apparatus for enabling communications, for example enabling access to a communication network or communications directly with other users. The communication device may access a carrier provided by a station or access point, and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known as the long-term evolution (LTE) or the Universal Mobile Telecommunications System (UMTS) radio-access technology. Another example communication system is so called 5G radio or new radio (NR) access technology.

The technical standard "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.3.0, 17 September 2018 is considered relevant for understanding the invention.

US2015/0296375A1 describes techniques for improving a public warning system for mobile communication.

### Summary

The invention relates to apparatuses and methods as set forth in the claims. It will be understood that aspects of this disclosure falling outside the scope of the claims may not be part of the invention but may be useful to understand the invention.

According to an aspect there is provided an apparatus as defined by the subject-matter of claims 1 to 9 attached.

According to an aspect there is provided an apparatus as defined by the subject-matter of claims 10 to 13 attached.

According to an aspect there is provided a method as defined by the subject-matter of claim 14 attached and another method as defined by the subject-matter of claim 15 attached.

### List of abbreviations

- AF:: Application Function
- AKA:: Authentication and Key Agreement
- AMF:: Access Management Function
- AUSF:: Authentication Server Function
- AS:: Access Stratum
- BS:: Base Station
- CE:: Control Element
- CU:: Centralized Unit
- DL:: Downlink
- DN:: Data Network
- DU:: Distributed Unit
- eNB:: eNodeB
- gNB:: gNodeB
- GSM:: Global System for Mobile communication
- GUTI:: Globally Unique Temporary Identifier
- HSS:: Home Subscriber Server
- IoT:: Internet of Things
- LTE:: Long Term Evolution
- NEF:: Network Exposure Function
- NR:: New radio
- MAC:: Medium Access Control
- MS:: Mobile Station
- MTC:: Machine Type Communication
- PUCCH:: Physical Uplink Control Channel
- RAM:: Random Access Memory
- RAN:: Radio Access Network
- RF:: Radio Frequency
- ROM:: Read Only Memory
- SMC:: Security Mode Command
- SMF:: Session Management Function
- UDM:: User Data Management
- UE:: User Equipment
- UL:: Uplink
- UMTS:: Universal Mobile Telecommunication System
- USB:: Universal
- 3GPP:: 3^{rd} Generation Partnership Project
- 5G:: 5^{th} Generation
- 5GCN:: 5G Core network
- 5GRAN:: 5G Radio Access Network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows a schematic representation of signalling diagram of a process for providing a public key of a public land mobile network to a terminal;
Figure 5 shows another schematic representation of signalling diagram of a process for providing a public key of a public land mobile network to a terminal;
Figure 6 shows a schematic representation of signalling diagram of a method performed by a core network function for providing a public key of a public land mobile network to a terminal;
Figure 7 shows a schematic representation of signalling diagram of a method performed by a terminal to be provided with a public key of a public land mobile network from a core network function;
Figure 8 shows a schematic representation of a non-volatile memory medium storing instructions which when executed by a processor allow a processor to perform one or more of the steps of the methods of Figures 6 and 7.

### Detailed Description of the Figures

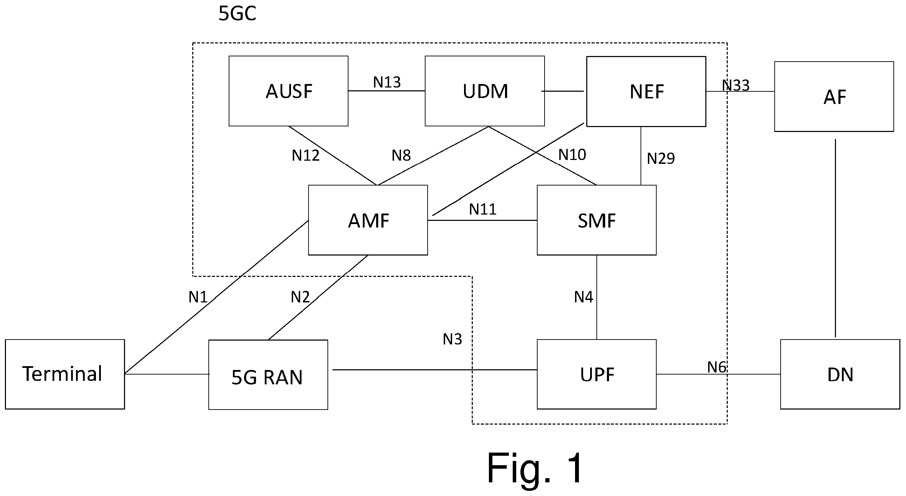

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a terminal, a 5G radio access network (5GRAN), a 5G core network (5GCN), one or more application function (AF) and one or more data networks (DN).

The 5GRAN may comprise one or more gNodeB (GNB) distributed unit functions connected to one or more gNodeB (GNB) centralized unit functions.

The 5GCN may comprise an access management function (AMF), a session management function (SMF), an authentication server function (AUSF), a user data management (UDM), a user plane function (UPF) and/or a network exposure function (NEF).

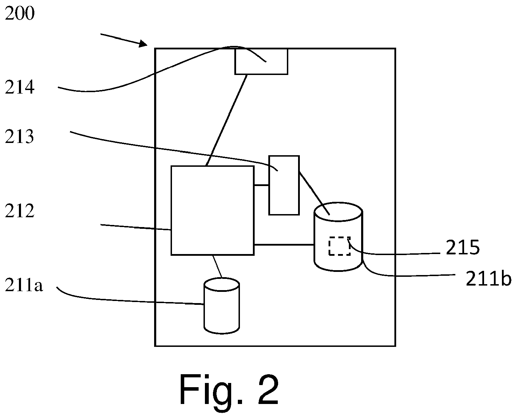

Figure 2 illustrates an example of a control apparatus 200 for controlling a function of the 5GRAN or the 5GCN as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GCN. In some embodiments, each function of the 5GRAN or the 5GCN comprises a control apparatus 200. In alternative embodiments, two or more functions of the 5GRAN or the 5GCN may share a control apparatus.

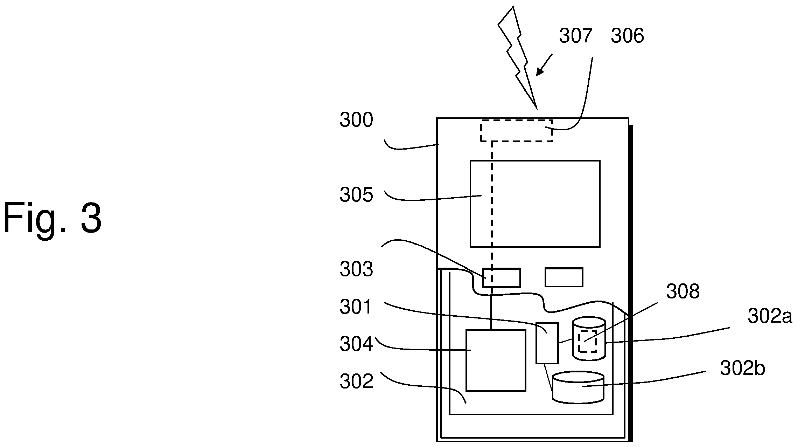

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 211b. The at least one processor 301 may be configured to execute an appropriate software code 308. The software code 308 may for example allow to perform one or more of the present aspects. The software code 308 may be stored in the ROM 302b.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to using public key cryptography in a public land mobile network (PLMN), such as a 5GS PLMN. It will be understood that although one or more aspects of this disclosure relate to a 5GS they may be applicable to other cellular systems.

Public key cryptography, sometimes referred as asymmetric cryptography, is a cryptographic technique that uses a pair of keys to encrypt information. The pair of keys may comprise a public key and a private key. A core network function may provide the public key of a PLMN to a terminal and may keep the private key of the PLMN secret. The terminal may encrypt information using the public key of the PLMN. The core network function may decrypt the encrypted information using the private key of the PLMN.

A problem to be addressed with public key cryptography in cellular systems is how to distribute the public key of a PLMN to a terminal. Previous discussions have revolved around the use of a certification authority. This may however not be workable as a terminal may not be connected and access to a certification authority may not be available.

More specifically, a problem to be addressed with public key cryptography in cellular systems is how to distribute the public key of a PLMN to a terminal, where the terminal and the network mutually consider each other to be a trusted party as the terminal and the network validate each other identity by the 3GPP authentication and key agreement (AKA) which occurs during a security mode command (SMC) procedure (see e.g. TS 23.501 and TS 33.501). When this mutual validation is achieved, the terminal and the network share a secret Key which isreferred to as a NAS key (Non Access Stratum Key). At that point, a public key for the PLMN can be distributed as it can be integrity protected by the PLMN using the NAS key established when the UE registers with the PLMN and has executed the SMC procedure.

According to one or more aspect of this disclosure, when a terminal may camp on a PLMN for the first time and may not store any public key for the PLMN. The terminal may register with the PLMN. The terminal may send a registration request message to a CN function of the PLMN. The terminal may indicate that the terminal has a capability to receive the public key of the PLMN (i.e. the terminal supports provisioning of the public key of the PLMN). Additionally, or alternatively, the terminal may indicate that the terminal requests to receive the public key of the PLMN.

Once security is established with the CN function of the PLMN (e.g. with mutual authentication between the terminal and the AMF in the 5G system (5GS) by means of the primary authentication and key agreement procedure defined in TS 33.501 and TS 24.501, and followed by the SMC (Security Mode Control) procedure defined in TS 24.501 and TS 33.501), the CN function may provide to the terminal the public key of the PLMN, an identifier of the public key of the PLMN and/or an expiration time (i.e. validity time) of the public key of the PLMN. The CN function may provide to the terminal the public key of the PLMN, an identifier of the public key of the PLMN and/or an expiration time of the public key of the PLMN in a registration accept message. This is transferred securely as the message is integrity protected so there is no way for a third party to tamper with the value of the public key.

It will be understood that an identifier of a public key of a PLMN may be an index or other.

The terminal may store the public key of the PLMN, the identifier of the public key of the PLMN and/or the expiration time of the public key of the PLMN in (permanent or non-permanent) memory. The terminal may then use the public key of the PLMN. For example, the terminal may use the public key of the PLMN to secure access stratum signaling before non access stratum (NAS) signalling connection is established with the CN of the PLMN.

At any time, the CN function may provide to the terminal a new public key of the PLMN to replace the public key stored by the terminal for the PLMN, an identifier of the new public key of the PLMN and/or an expiration time of the new public key of the PLMN. The new public key of the PLMN, the identifier of the new public key of the PLMN and/or the expiration time of the new public key of the PLMN may be provided in a registration accept message or a terminal configuration command message.

When the terminal already stores a public key for the PLMN, the terminal may not indicate that the terminal requests to receive the public key of the PLMN in the registration request message.

Alternatively, when the terminal already stores a public key for the PLMN, the terminal may indicate that the terminal requests to receive the public key of the PLMN in the registration request message before the expiration of the expiration time of the public key stored by terminal for the PLMN. In this way, the terminal may be provided with the new public key of the PLMN, the identifier of the new public key of the PLMN and/or the expiration time of the new public key of the PLMN before the expiration time of the public key stored by terminal for the PLMN.

A PLMN may provide a set of different public keys, a set of different identifieres of the set of different public keys and a set of different expiration times of the set of different public keys to avoid synchronization problems when the expiration time of the public key stored by terminal for the PLMN expires and/or the need to renew the public key stored by terminal for the PLMN too frequently.

If the expiration time of a public key stored by the terminal expires when the terminal is not under PLMN coverage, the public key of the PLMN, the identifier of the public key of the PLMN and/or the expiration time of the public key of the PLMN may be removed from memory. The terminal may subsequently obtain a new public key of the PLMN.

It will be understood the public key of the PLMN may or may not be associated with an identifier. Likewise, the public key of the PLMN may or may not be associated with expiration time.

The public key stored by the terminal for the PLMN may be revoked by the CN function of the PLMN. For example, the terminal may store a public key for the PLMN and an identifier of the public key stored by the terminal for the PLMN. The terminal may or may not store an expiration time of the public key stored by the terminal for the PLM. When the terminal sends a registration request message to the CN function of the PLMN, the terminal may indicate the identifier of the public key stored by the terminal for the PLMN. The CN function may determine to revoke the public key stored by the terminal for the PLMN based on the identifier (e.g. the private key of the PLMN associated with the public key stored by the terminal for the PLMN has been corrupted or other). The CN function may provide a new public key of the PLMN and a new identifier of the new public key of the PLMN in a registration accept message. The CN function may or may not provide a new expiration time of the new public key of the PLMN in a registration accept message.

One or more aspect of this disclosure are advantageous in that they may reuse a trusted relationship between a terminal and a CN function of a PLMN and may not require a separate certification authority.

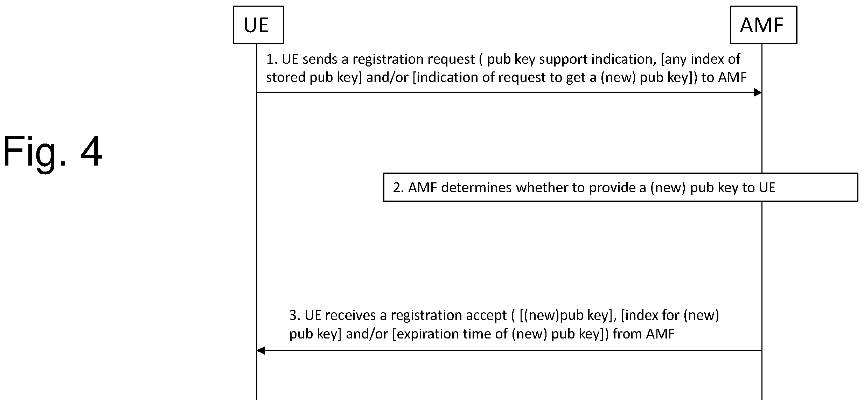

Figure 4 shows a schematic representation of signalling diagram of a process for providing a public key of a public land mobile network to a terminal.

In step 1, the terminal (e.g. UE) may send a registration request message to a CN function (e.g. AMF) of a PLMN. The registration request message may comprise an indication that the terminal has a capability to receive the public key of the PLMN (i.e. the terminal supports provisioning of the public key of the PLMN). The registration request message may comprise an indication of a request of the terminal to receive a public key of the PLMN.

Alternatively, the registration request message may comprise an indication of a request of the terminal to receive a new public key of the PLMN and/or an indication of a public key stored by the terminal for the PLMN.

In step 2, the CN function may determine whether to provide a public key of the PLMN to the terminal, for example when the registration request message may comprise an indication of a request of the terminal to receive the public key of the PLMN.

Alternatively, the CN function may AMF determine whether to provide a new public key of the PLMN to the terminal, for example when the registration request message may comprise indication of a public key stored by the terminal for the PLMN.

In step 3, the terminal may receive a registration accept message from the CN function. The registration accept message may comprise the public key of the PLMN. The registration accept message may comprise an identifier of the public key of the PLMN and/or an expiration time of the public key of the PLMN. The terminal may store the public key of the PLMN, the identifier of the public key of the PLMN and/or the expiration time of the public key of the PLMN. The terminal may use the public key.

Alternatively, the registration accept message may comprise the new public key of the PLMN. The registration accept message may comprise an identifier of the new public key of the PLMN and/or an expiration time of the new public key of the PLMN. The terminal may store the new public key of the PLMN, the identifier of the new public key of the PLMN and/or the expiration time of the new public key of the PLMN. The terminal may use the new public key.

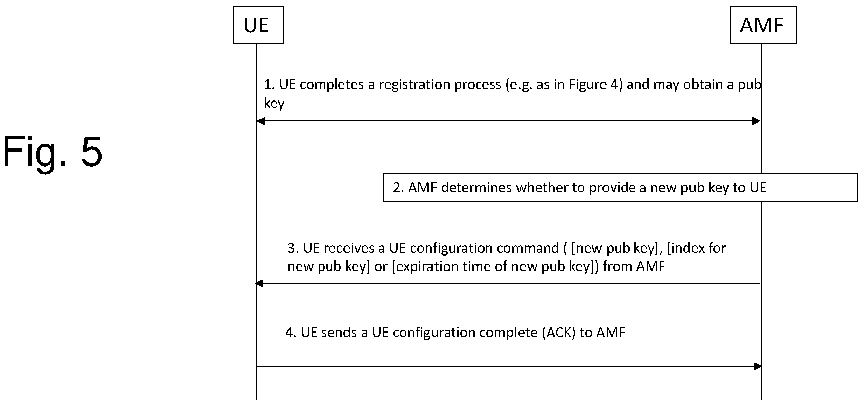

Figure 5 shows another schematic representation of signalling diagram of a process for providing a public key of a public land mobile network to a terminal.

In step 1, the terminal (e.g. UE) may complete a registration process, for example the registration process of Figure 4, and may store a public key of the PLMN, an identifier of the public key of the PLMN and/or an expiration time of the public key of the PLMN.

In step 2, the CN function may determine whether to provide a new public key of the PLMN to the terminal

In step 3, the terminal may receive a terminal configuration command message from the CN function. The terminal configuration command message may comprise the new public key of the PLMN. The terminal configuration command message may comprise an identifier of the new public key of the PLMN and/or an expiration time of the new public key of the PLMN. The terminal may store the new public key of the PLMN, the identifier of the public key of the PLMN and/or the expiration time of the new public key of the PLMN. The terminal may use the public key.

In step 4, the terminal may send a terminal configuration complete message to the CN function. The terminal configuration complete message may comprise an indication of acknowledgement.

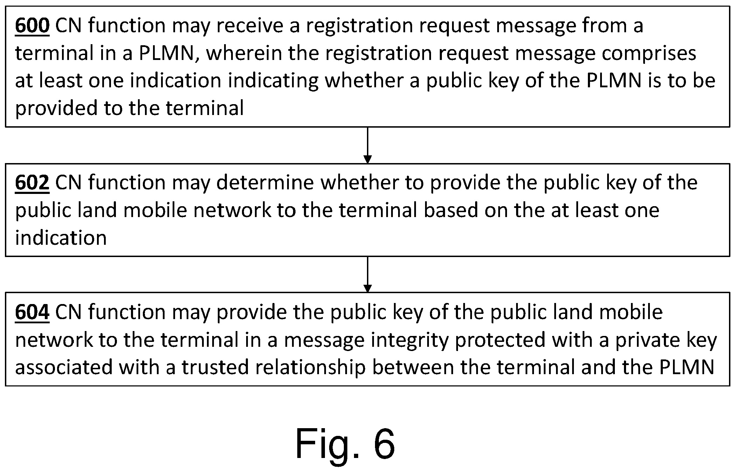

Figure 6 shows a schematic representation of signalling diagram of a method performed by a CN function (e.g. AMF) for providing a public key of a PLMN to a terminal (e.g. UE).

In step 600, the CN function may receive a message from the terminal in the PLMN. The message may comprise a registration request message, an attach request message, a tracking area update message or a mobility management update message.

The message may comprise at least one indication indicating whether a public key of the PLMN is to be provided to the terminal.

The at least one indication may comprise an indication of a capability of the terminal to receive the public key of the PLMN.

The at least one indication may comprise an indication of a request of the terminal to receive the public key of the PLMN. The indication of a request to provide the public key of the PLMN to the terminal may comprise a reserved identifier value.

The at least one indication may comprise an indication of a public key stored by the terminal for the PLMN. The indication of the public key stored by the terminal for the PLMN may comprise an identifier associated with the public key stored by the terminal for the PLMN.

In step 602, the CN function may determine whether to provide the public key of the PLMN to the terminal based on the at least one indication.

In step 602, the CN function may provide the public key of the PLMN to the terminal. The CN function may provide an identifier associated with the public key of the PLMN to the terminal. The CN function may provide an expiration time associated with the public key of the PLMN to the terminal.

The CN function may provide at least one of the public key of the PLMN, the identifier associated with the public key of the PLMN or the expiration time associated with the public key of the PLMN in a configuration update command.

The CN function may provide at least one of the public key of the PLMN, the identifier associated with the public key of the PLMN or the expiration time associated with the public key of the PLMN in a message. The message may be integrity protected using a private key associated with a trusted relationship between the terminal and the mobile network. The message may comprise a registration accept message, an attach accept message, a tracking area update accept message, a mobility management update accept message, a terminal configuration update command message or a globally unique temporary identifier (GUTI) reallocation command message.

The CN function may determine to provide the public key of the PLMN to the terminal when the public key stored by the terminal for the PLMN has been revoked. The CN function may determine to not provide the public key of the PLMN to the terminal when the public key stored by the terminal for the PLMN has not been revoked.

The CN function may determine to provide the public key of the PLMN to the terminal when an expiration time associated with the public key stored by the terminal for the PLMN has expired. The CN function may determine to not provide a public key of the PLMN to the terminal when the expiration time associated with the public key stored by the terminal for the PLMN has not expired.

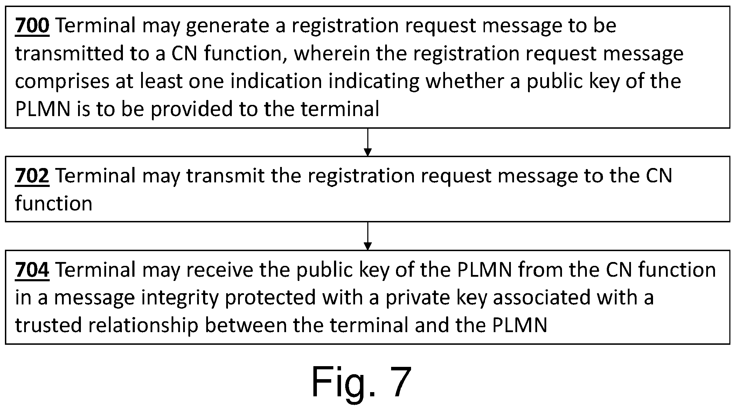

Figure 7 shows a schematic representation of signalling diagram of a method performed by a terminal (e.g. UE) to be provided with a public key of a public land mobile network from a CN function (e.g. AMF).

In step 700, the terminal may generate a message to be transmitted to a CN function. The message may comprise a registration request message, an attach request message, a tracking area update message or a mobility management update message. The message may comprise at least one indication indicating whether a public key of the PLMN is to be provided to the terminal.

The at least one indication may comprise an indication of a capability of the terminal to receive the public key of the PLMN.

The at least one indication may comprise an indication of a request of the terminal to receive the public key of the PLMN. The indication of a request to provide the public key of the PLMN to the terminal may comprise a reserved identifier value. The terminal may receive the reserved identifier value from the CN function.

The at least one indication may comprise an indication of a public key stored by the terminal for the PLMN. The indication of the public key stored by the terminal for the PLMN may comprise an identifier associated with the public key stored by the terminal for the PLMN.

In step 702, the terminal may transmit the message to the CN function.

In step 704, the terminal may receive the public key of the PLMN from the core network function. The terminal may receive an identifier associated with the public key of the PLMN from the CN function. The terminal may receive an expiration time associated with the public key of the PLMN from the CN function.

The terminal may receiveat least one of the public key of the PLMN, the identifier associated with the public key of the PLMN or the expiration time associated with the public key of the PLMN in a message. The message may be integrity protected using a private key associated with a trusted relationship between the terminal and the mobile network. The message may comprise a registration accept message, an attach accept message, a tracking area update accept message, a mobility management update accept message, a terminal configuration update command message or a globally unique temporary identifier (GUTI) reallocation command message.

The terminal may receive at least one of the public key of the PLMN, the identifier associated with the public key of the PLMN or the expiration time associated with the public key of the PLMN from the CN function in a configuration update command.

The terminal may receive at least one of the public key of the PLMN, the identifier associated with the public key of the PLMN or the expiration time associated with the public key of the PLMN from the CN function in a registration accept message.

The terminal may store at least one of the public key of the PLMN, the identifier associated with the public key of the PLMN or the expiration time associated with the public key of the PLMN.

The terminal may request the network to provide a new public key before the expiration time.

The terminal may erase the public key stored for the PLMN and/or the identifier associated with the public key stored for the PLMN upon expiration of the expiration of the expiration time.

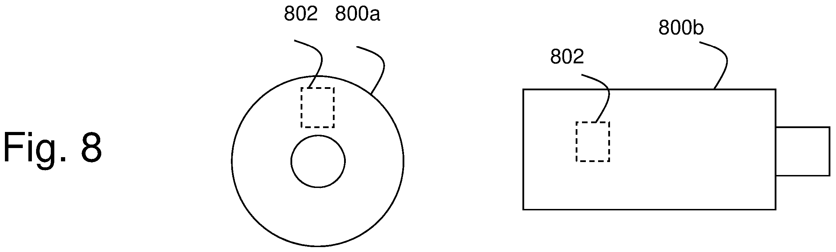

Figure 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the methods of Figures 6 or 7.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 6 and 7, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments.

## Claims

1. An apparatus comprising:
at least one processor; and
at least one memory including computer program code;
the at least one memory and the computer program code configured to, with the at least one processor, cause the apparatus at least to:
receive (600) a message from a terminal in a public land mobile network, wherein the message comprises at least one indication indicating whether a public key of the public land mobile network is to be provided to the terminal to encrypt information;
determine (602) whether to provide the public key of the public land mobile network to the terminal based on the at least one indication;
said apparatus being **characterized by** being configured to:
provide (604) the public key of the public land mobile network in a message integrity protected using a private key associated with a trusted relationship between the terminal and the public land mobile network; and
use another private key paired with the public key to decrypt information encrypted by the terminal using the public key.

2. The apparatus of claim 1, wherein the message comprises a registration request message, an attach request message, a tracking area update message or a mobility management update message.

3. The apparatus of claim 1 or claim 2, wherein:
the at least one indication comprises an indication of a capability of the terminal to receive the public key of the public land mobile network;
the at least one indication comprises an indication of a request of the terminal to receive the public key of the public land mobile network; and/or
the at least one indication comprises an indication of a public key stored by the terminal for the public land mobile network.

4. The apparatus of any of claims 1 to 3, wherein the at least one memory and the computer program code are configured to, with the at least one processor, cause the apparatus at least to:
provide an index associated with the public key of the public land mobile network to the terminal; and/or
provide an expiration time associated with the public key of the public land mobile network to the terminal.

5. The apparatus of claim 4, wherein the at least one memory and the computer program code are configured to, with the at least one processor, cause the apparatus at least to:
provide (604) at least one of the index associated with the public key of the public land mobile network or the expiration time associated with the public key of the public land mobile network in the message integrity protected using the private key associated with a trusted relationship between the terminal and the mobile network.

6. The apparatus of claim 5, wherein the message comprises a registration accept message, an attach accept message, a tracking area update accept message, a mobility management update accept message, a terminal configuration update command message or a globally unique temporary identifier reallocation command message.

7. The apparatus of any of claims 3 to 6, wherein the indication of a request to provide the public key of the public land mobile network to the terminal comprises a reserved index value.

8. The apparatus of any of claims 3 to 7, wherein the indication of the public key stored by the terminal for the public land mobile network comprises an index associated with the public key stored by the terminal for the public land mobile network.

9. The apparatus of any of claims 3 to 8, wherein the at least one memory and the computer program code are configured to, with the at least one processor, cause the apparatus at least to:
determine to provide the public key of the public land mobile network to the terminal when the public key stored by the terminal for the public land mobile network has been revoked and/or when an expiration time associated with the public key stored by the terminal for the public land mobile network has expired; and
determine to not provide the public key of the public land mobile network to the terminal when the public key stored by the terminal for the public land mobile network has not been revoked and/or when an expiration time associated with the public key stored by the terminal for the public land mobile network has not expired.

10. An apparatus comprising:
at least one processor; and
at least one memory including computer program code;
the at least one memory and the computer program code configured to, with the at least one processor, cause the apparatus at least to:
generate (700) a message to be transmitted to a core network function, wherein the message comprises at least one indication indicating whether a public key of a public land mobile network is to be provided to the apparatus;
said apparatus being **characterized by** being configured to:
receive the public key of the public land mobile network in a message integrity protected using a private key associated with a trusted relationship between the apparatus and the public land mobile network;
store the public key of the public land mobile network; and
using the public key to encrypt information.

11. The apparatus of claim 10, wherein the at least one memory and the computer program code are configured to, with the at least one processor, cause the apparatus at least to:
receive and/or store an index associated with the public key of the public land mobile network or an expiration time associated with the public key of the public land mobile network.

12. The apparatus of claim 11, wherein the at least one memory and the computer program code are configured to, with the at least one processor, cause the apparatus at least to:
request the public land mobile network to provide a new public key of the public land mobile network before the expiration time.

13. The apparatus of claim 11 wherein the at least one memory and the computer program code are configured to, with the at least one processor, cause the apparatus at least to:
erase the stored public key for the public land mobile network upon expiration of the expiration of the expiration time.

14. A method comprising:
receiving (600) a message from a terminal in a public land mobile network, wherein the message comprises at least one indication indicating whether a public key of the public land mobile network is to be provided to the terminal to encrypt information;
determining (602) whether to provide the public key of the public land mobile network to the terminal based on the at least one indication;
said method being **characterized by**:
providing (604) the public key of the public land mobile network in a message integrity protected using a private key associated with a trusted relationship between the terminal and the public land mobile network; and
using another private key paired with the public key to decrypt information encrypted by the terminal using the public key.

15. A method comprising:
generating (700) a message to be transmitted to a core network function, wherein the message comprises at least one indication indicating whether a public key of a public land mobile network is to be provided to a terminal;
said method being **characterized by**:
receiving the public key of the public land mobile network in a message integrity protected using a private key associated with a trusted relationship between the apparatus and the public land mobile network;
storing the public key of the public land mobile network; and
using the public key to encrypt information.

## Patentansprüche

1. Vorrichtung umfassend:
zumindest einen Prozessor; und
zumindest einen Speicher, der Computerprogrammcode beinhaltet;
wobei der zumindest eine Speicher und der Computerprogrammcode dafür konfiguriert sind, zusammen mit dem zumindest einen Prozessor die Vorrichtung zumindest zu veranlassen zum:
Empfangen (600) einer Nachricht von einem Endgerät in einem öffentlichen terrestrischen Mobilfunknetz, wobei die Nachricht mindestens eine Angabe umfasst, die angibt, ob dem Endgerät ein öffentlicher Schlüssel des öffentlichen terrestrischen Mobilfunknetzes zur Verschlüsselung von Informationen bereitgestellt werden soll;
Ermitteln (602), ob der öffentliche Schlüssel des öffentlichen terrestrischen Mobilfunknetzes dem Endgerät auf der Grundlage der mindestens einen Angabe bereitgestellt werden soll;
wobei die Vorrichtung **dadurch gekennzeichnet ist, dass** sie konfiguriert ist zum:
Bereitstellen (604) des öffentlichen Schlüssels des öffentlichen terrestrischen Mobilfunknetzes in einer Nachrichtenintegrität, die unter Verwendung eines privaten Schlüssels geschützt ist, der mit einer vertrauenswürdigen Beziehung zwischen dem Endgerät und dem öffentlichen terrestrischen Mobilfunknetz verknüpft ist; und
Verwenden eines weiteren privaten Schlüssels, der mit dem öffentlichen Schlüssel gepaart ist, um Informationen zu entschlüsseln, die von dem Endgerät unter Verwendung des öffentlichen Schlüssels verschlüsselt werden.

2. Vorrichtung nach Anspruch 1, wobei die Nachricht eine Registrierungsanforderungsnachricht, eine Anfügeanforderungsnachricht, eine Aktualisierungsnachricht für den Nachverfolgungsbereich oder eine Aktualisierungsnachricht für das Mobilitätsmanagement umfasst.

3. Vorrichtung nach Anspruch 1 oder Anspruch 2, wobei:
die mindestens eine Angabe eine Angabe einer Fähigkeit des Endgeräts zum Empfangen des öffentlichen Schlüssels des öffentlichen terrestrischen Mobilfunknetzes umfasst;
die mindestens eine Angabe eine Angabe einer Anforderung des Endgeräts zum Empfangen des öffentlichen Schlüssels des öffentlichen terrestrischen Mobilfunknetzes umfasst; und/oder
die mindestens eine Angabe eine Angabe eines von dem Endgerät gespeicherten öffentlichen Schlüssels für das öffentliche terrestrische Mobilfunknetz umfasst.

4. Vorrichtung nach einem der Ansprüche 1 bis 3, wobei der zumindest eine Speicher und der Computerprogrammcode dafür konfiguriert sind, zusammen mit dem zumindest einen Prozessor die Vorrichtung zumindest zu veranlassen zum:
Bereitstellen eines Index, der mit dem öffentlichen Schlüssel des öffentlichen terrestrischen Mobilfunknetzes verknüpft ist, für das Endgerät; und/oder
Bereitstellen einer Ablaufzeit, die mit dem öffentlichen Schlüssel des öffentlichen terrestrischen Mobilfunknetzes verknüpft ist, für das Endgerät.

5. Vorrichtung nach Anspruch 4, wobei der zumindest eine Speicher und der Computerprogrammcode dafür konfiguriert sind, zusammen mit dem zumindest einen Prozessor die Vorrichtung zumindest zu veranlassen zum:
Bereitstellen (604) mindestens entweder des Indexes, der mit dem öffentlichen Schlüssel des öffentlichen terrestrischen Mobilfunknetzes verknüpft ist, oder der Ablaufzeit, die mit dem öffentlichen Schlüssel des öffentlichen terrestrischen Mobilfunknetzes verknüpft ist, in der Nachrichtenintegrität, die unter Verwendung des privaten Schlüssels, der mit einer vertrauenswürdigen Beziehung zwischen dem Endgerät und dem Mobilfunknetz verknüpft ist, geschützt ist.

6. Vorrichtung nach Anspruch 5, wobei die Nachricht eine Registrierungsannahmenachricht, eine Anfügeannahmenachricht, eine Aktualisierungsannahmenachricht für den Nachverfolgungsbereich, eine Aktualisierungsannahmenachricht für das Mobilitätsmanagement, eine Aktualisierungsbefehlsnachricht für die Endgerätekonfiguration oder eine Befehlsnachricht für die Neuzuweisung einer global eindeutigen temporären Kennung umfasst.

7. Vorrichtung nach einem der Ansprüche 3 bis 6, wobei die Angabe einer Anforderung zum Bereitstellen des öffentlichen Schlüssels des öffentlichen terrestrischen Mobilfunknetzes für das Endgerät einen reservierten Indexwert umfasst.

8. Vorrichtung nach einem der Ansprüche 3 bis 7, wobei die Angabe des öffentlichen Schlüssels, der von dem Endgerät für das öffentliche terrestrische Mobilfunknetz gespeichert ist, einen Index umfasst, der mit dem öffentlichen Schlüssel verknüpft ist, der von dem Endgerät für das öffentliche terrestrische Mobilfunknetz gespeichert ist.

9. Vorrichtung nach einem der Ansprüche 3 bis 8, wobei der zumindest eine Speicher und der Computerprogrammcode dafür konfiguriert sind, zusammen mit dem zumindest einen Prozessor die Vorrichtung zumindest zu veranlassen zum:
Bestimmen, dass der öffentliche Schlüssel des öffentlichen terrestrischen Mobilfunknetzes dem Endgerät bereitgestellt wird, wenn der öffentliche Schlüssel, der von dem Endgerät für das öffentliche terrestrische Mobilfunknetz gespeichert ist, widerrufen wurde und/oder wenn eine Ablaufzeit, die mit dem von dem Endgerät für das öffentliche terrestrische Mobilfunknetz gespeicherten öffentlichen Schlüssel verknüpft ist, abgelaufen ist; und
Bestimmen, dass der öffentliche Schlüssel des öffentlichen terrestrischen Mobilfunknetzes dem Endgerät nicht bereitgestellt wird, wenn der öffentliche Schlüssel, der von dem Endgerät für das öffentliche terrestrische Mobilfunknetz gespeichert ist, nicht widerrufen wurde und/oder wenn eine Ablaufzeit, die mit dem von dem Endgerät für das öffentliche terrestrische Mobilfunknetz gespeicherten öffentlichen Schlüssel verknüpft ist, nicht abgelaufen ist.

10. Vorrichtung umfassend:
zumindest einen Prozessor; und
zumindest einen Speicher, der Computerprogrammcode beinhaltet;
wobei der zumindest eine Speicher und der Computerprogrammcode dafür konfiguriert sind, zusammen mit dem zumindest einen Prozessor die Vorrichtung zumindest zu veranlassen zum:
Erzeugen (700) einer an eine Kernnetzfunktion zu übertragende Nachricht, wobei die Nachricht mindestens eine Angabe umfasst, die angibt, ob der Vorrichtung ein öffentlicher Schlüssel eines öffentlichen terrestrischen Mobilfunknetzes bereitgestellt werden soll;
wobei die Vorrichtung **dadurch gekennzeichnet ist, dass** sie konfiguriert ist zum:
Empfangen des öffentlichen Schlüssels des öffentlichen terrestrischen Mobilfunknetzes in einer Nachrichtenintegrität, die unter Verwendung eines privaten Schlüssels geschützt ist, der mit einer vertrauenswürdigen Beziehung zwischen der Vorrichtung und dem öffentlichen terrestrischen Mobilfunknetz verknüpft ist;
Speichern des öffentlichen Schlüssels des öffentlichen terrestrischen Mobilfunknetzes; und
Verwenden des öffentlichen Schlüssels zum Verschlüsseln von Informationen.

11. Vorrichtung nach Anspruch 10, wobei der zumindest eine Speicher und der Computerprogrammcode dafür konfiguriert sind, zusammen mit dem zumindest einen Prozessor die Vorrichtung zumindest zu veranlassen zum:
Empfangen und/oder Speichern eines Index, der mit dem öffentlichen Schlüssel des öffentlichen terrestrischen Mobilfunknetzes verknüpft ist, oder einer Ablaufzeit, die mit dem öffentlichen Schlüssel des öffentlichen terrestrischen Mobilfunknetzes verknüpft ist.

12. Vorrichtung nach Anspruch 11, wobei der zumindest eine Speicher und der Computerprogrammcode dafür konfiguriert sind, zusammen mit dem zumindest einen Prozessor die Vorrichtung zumindest zu veranlassen zum:
Auffordern des öffentlichen terrestrischen Mobilfunknetzes, vor der Ablaufzeit einen neuen öffentlichen Schlüssel des öffentlichen terrestrischen Mobilfunknetzes bereitzustellen.

13. Vorrichtung nach Anspruch 11, wobei der zumindest eine Speicher und der Computerprogrammcode dafür konfiguriert sind, zusammen mit dem zumindest einen Prozessor die Vorrichtung zumindest zu veranlassen zum:
Löschen des gespeicherten öffentlichen Schlüssels für das öffentliche terrestrische Mobilfunknetz nach Ablauf der Ablaufzeit.

14. Verfahren umfassend:
Empfangen (600) einer Nachricht von einem Endgerät in einem öffentlichen terrestrischen Mobilfunknetz, wobei die Nachricht mindestens eine Angabe umfasst, die angibt, ob dem Endgerät ein öffentlicher Schlüssel des öffentlichen terrestrischen Mobilfunknetzes zur Verschlüsselung von Informationen bereitgestellt werden soll;
Ermitteln (602), ob der öffentliche Schlüssel des öffentlichen terrestrischen Mobilfunknetzes dem Endgerät auf der Grundlage der mindestens einen Angabe bereitgestellt werden soll;
wobei das Verfahren **gekennzeichnet ist durch**:
Bereitstellen (604) des öffentlichen Schlüssels des öffentlichen terrestrischen Mobilfunknetzes in einer Nachrichtenintegrität, die unter Verwendung eines privaten Schlüssels geschützt ist, der mit einer vertrauenswürdigen Beziehung zwischen dem Endgerät und dem öffentlichen terrestrischen Mobilfunknetz verknüpft ist; und
Verwenden eines weiteren privaten Schlüssels, der mit dem öffentlichen Schlüssel gepaart ist, um Informationen zu entschlüsseln, die von dem Endgerät unter Verwendung des öffentlichen Schlüssels verschlüsselt werden.

15. Verfahren umfassend:
Erzeugen (700) einer an eine Kernnetzfunktion zu übertragende Nachricht, wobei die Nachricht mindestens eine Angabe umfasst, die angibt, ob einem Endgerät ein öffentlicher Schlüssel eines öffentlichen terrestrischen Mobilfunknetzes bereitgestellt werden soll;
wobei das Verfahren **gekennzeichnet ist durch**:
Empfangen des öffentlichen Schlüssels des öffentlichen terrestrischen Mobilfunknetzes in einer Nachrichtenintegrität, die unter Verwendung eines privaten Schlüssels geschützt ist, der mit einer vertrauenswürdigen Beziehung zwischen der Vorrichtung und dem öffentlichen terrestrischen Mobilfunknetz verknüpft ist;
Speichern des öffentlichen Schlüssels des öffentlichen terrestrischen Mobilfunknetzes; und
Verwenden des öffentlichen Schlüssels zum Verschlüsseln von Informationen.

## Revendications

1. Appareil comprenant :
au moins un processeur ; et
au moins une mémoire comportant un code de programme informatique ;
l'au moins une mémoire et le code de programme informatique étant configurés pour, avec l'au moins un processeur, amener l'appareil au moins à :
recevoir (600) un message d'un terminal dans un réseau mobile terrestre public,
dans lequel le message comprend au moins une indication indiquant si une clé publique du réseau mobile terrestre public doit être fournie au terminal pour crypter des informations ;
déterminer (602) s'il faut fournir au terminal la clé publique du réseau mobile terrestre public sur la base de l'au moins une indication ;
ledit appareil étant **caractérisé en ce qu'**il est configuré pour :
fournir (604) la clé publique du réseau mobile terrestre public dans un message dont l'intégrité est protégée à l'aide d'une clé privée associée à une relation de confiance entre le terminal et le réseau mobile terrestre public ; et
utiliser une autre clé privée appariée avec la clé publique pour décrypter des informations cryptées par le terminal à l'aide de la clé publique.

2. Appareil selon la revendication 1, dans lequel le message comprend un message de demande d'enregistrement, un message de demande de rattachement, un message de mise à jour de zone de suivi ou un message de mise à jour de gestion de la mobilité.

3. Appareil selon la revendication 1 ou la revendication 2, dans lequel :
l'au moins une indication comprend une indication de la capacité du terminal pour recevoir la clé publique du réseau mobile terrestre public ;
l'au moins une indication comprend une indication d'une demande du terminal pour recevoir la clé publique du réseau mobile terrestre public ; et/ou
l'au moins une indication comprend une indication d'une clé publique stockée par le terminal pour le réseau mobile terrestre public.

4. Appareil selon l'une des revendications 1 à 3, dans lequel l'au moins une mémoire et le code de programme informatique sont configurés pour, avec l'au moins un processeur, amener l'appareil au moins à :
fournir au terminal un index associé à la clé publique du réseau mobile terrestre public au terminal ; et/ou
fournir au terminal un délai d'expiration associé à la clé publique du réseau mobile terrestre public.

5. Appareil selon la revendication 4, dans lequel l'au moins une mémoire et le code de programme informatique sont configuré pour, avec l'au moins un processeur, amener l'appareil au moins à :
fournir (604) au terminal au moins un parmi l'index associé à la clé publique du réseau mobile terrestre public ou le délai d'expiration associé à la clé publique du réseau mobile terrestre public dans le message dont l'intégrité est protégée à l'aide de la clé privée associée à une relation de confiance entre le terminal et le réseau mobile.

6. Appareil selon la revendication 5, dans lequel le message comprend un message d'acceptation d'enregistrement, un message d'acceptation de rattachement, un message d'acceptation de mise à jour de zone de suivi, un message d'acceptation de mise à jour de gestion de la mobilité, un message de commande de mise à jour de configuration de terminal ou un message de commande de réattribution d'identifiant temporaire unique au niveau mondial.

7. Appareil selon l'une des revendications 3 à 6, dans lequel l'indication d'une demande pour fournir au terminal la clé publique du réseau mobile terrestre public comprend une valeur d'index réservée.

8. Appareil selon l'une des revendications 3 à 7, dans lequel l'indication de la clé publique stockée par le terminal pour le réseau mobile terrestre public comprend un index associé à la clé publique stockée par le terminal pour le réseau mobile terrestre public.

9. Appareil selon l'une des revendications 3 à 8, dans lequel l'au moins une mémoire et le code de programme informatique sont configuré pour, avec l'au moins un processeur, amener l'appareil au moins à :
déterminer de fournir au terminal la clé publique du réseau mobile terrestre public lorsque la clé publique stockée par le terminal pour le réseau mobile terrestre public a été révoquée et/ou lorsqu'un délai d'expiration associé à la clé publique stockée par le terminal pour le réseau mobile terrestre public a expiré ; et
déterminer de ne pas fournir au terminal la clé publique du réseau mobile terrestre public lorsque la clé publique stockée par le terminal pour le réseau mobile terrestre public n'a pas été révoquée et/ou lorsqu'un délai d'expiration associé à la clé publique stockée par le terminal pour le réseau mobile terrestre public n'a pas expiré.

10. Appareil comprenant :
au moins un processeur ; et
au moins une mémoire comportant un code de programme informatique ;
l'au moins une mémoire et le code de programme informatique étant configurés pour, avec l'au moins un processeur, amener l'appareil au moins à :
générer (700) un message à transmettre à une fonction de réseau central, dans lequel
le message comprend au moins une indication indiquant si une clé publique d'un réseau mobile terrestre public doit être fournie à l'appareil ;
ledit appareil étant **caractérisé en ce qu'**il est configuré pour :
recevoir la clé publique du réseau mobile terrestre public, dans un message dont l'intégrité est protégée à l'aide d'une clé privée associée à une relation de confiance entre l'appareil et le réseau mobile terrestre public ;
stocker la clé publique du réseau mobile terrestre public ; et
utiliser la clé publique pour crypter des informations.

11. Appareil selon la revendication 10, dans lequel l'au moins une mémoire et le code de programme informatique sont configuré pour, avec l'au moins un processeur, amener l'appareil au moins à :
recevoir et/ou stocker un index associé à la clé publique du réseau mobile terrestre public au terminal ou un délai d'expiration associé à la clé publique du réseau mobile terrestre public.

12. Appareil selon la revendication 11, dans lequel l'au moins une mémoire et le code de programme informatique sont configuré pour, avec l'au moins un processeur, amener l'appareil au moins à :
demander au réseau mobile terrestre public de fournir une nouvelle clé publique du réseau mobile terrestre public avant le délai d'expiration.

13. Appareil selon la revendication 11 dans lequel l'au moins une mémoire et le code de programme informatique sont configuré pour, avec l'au moins un processeur, amener l'appareil au moins à :
effacer la clé publique stockée pour le réseau mobile terrestre public à l'expiration du délai d'expiration.

14. Procédé comprenant :
la réception (600) d'un message d'un terminal dans un réseau mobile terrestre public, dans lequel le message comprend au moins une indication indiquant si une clé publique du réseau mobile terrestre public doit être fournie au terminal pour crypter des informations ;
la détermination (602) de la nécessité ou non de fournir au terminal la clé publique du réseau mobile terrestre public sur la base de l'au moins une indication ;
ledit procédé étant **caractérisé par** :
la fourniture (604) de la clé publique du réseau mobile terrestre public dans un message dont l'intégrité est protégée à l'aide d'une clé privée associée à une relation de confiance entre le terminal et le réseau mobile terrestre public ; et
l'utilisation d'une autre clé privée appariée avec la clé publique pour décrypter des informations cryptées par le terminal à l'aide de la clé publique.

15. Procédé comprenant :
la génération (700) d'un message à transmettre à une fonction de réseau central,
dans lequel le message comprend au moins une indication indiquant si une clé publique d'un réseau mobile terrestre public doit être fournie à un terminal ;
ledit procédé étant **caractérisé par** :
la réception de la clé publique du réseau mobile terrestre public dans un message dont l'intégrité est protégée à l'aide d'une clé privée associée à une relation de confiance entre l'appareil et le réseau mobile terrestre public ;
le stockage de la clé publique du réseau mobile terrestre public ; et
l'utilisation de la clé publique pour crypter des informations.
